(19) Europäisches Patentamt
European Patent Office
Office européen des brevets

(11) Numéro de publication : **0 118 325 B2**

(12) # NOUVEAU FASCICULE DE BREVET EUROPEEN

(45) Date de publication du nouveau fascicule du brevet : **19.01.94 Bulletin 94/03**

(51) Int. Cl.$^5$ : **C08L 83/04,** C08K 3/22

(21) Numéro de dépôt : **84400103.2**

(22) Date de dépôt : **18.01.84**

(54) **Compositions organopolysiloxaniques contenant des polyacyloxysilanes et durcissant très rapidement en élastomères en présence d'accélérateur du type hydroxyde métallique.**

(30) Priorité : **27.01.83 FR 8301504**

(43) Date de publication de la demande :
**12.09.84 Bulletin 84/37**

(45) Mention de la délivrance du brevet :
**05.11.86 Bulletin 86/45**

(45) Mention de la décision concernant l'opposition :
**19.01.94 Bulletin 94/03**

(84) Etats contractants désignés :
**AT BE CH DE FR GB IT LI LU NL SE**

(56) Documents cités :
**DE-A- 1 255 924**
**DE-A- 1 569 949**
**DE-C- 2 408 408**
**FR-A- 1 198 749**
**FR-A- 2 172 764**
**GB-A- 640 067**
**GB-A- 1 136 718**
**GB-A- 1 181 346**
**GB-A- 1 308 985**
**US-A- 2 571 533**
**US-A- 3 061 575**

(56) Documents cités :
**US-A- 3 133 891**
**US-A- 3 642 693**
**Fachlexikon, ABC, Chemie, 1979, p. 38**
**NOLL, Chemie und Technologie der Silicone, 2e. édition, 1968, pages 341-342**
**P. Pascal-Nouveau traité de Chimie Minérale 1958, p. 158-162**
**Römpps Chmie-Lexikon, 8e. éditon, vol. 4, p. 2456 "Magnesiumoxid"**

(73) Titulaire : **RHONE-POULENC CHIMIE**
**25, quai Paul Doumer**
**F-92408 Courbevoie Cédex (FR)**

(72) Inventeur : **Letoffe, Michel**
**5, avenue de Limburg**
**F-69110 Sainte-Foy-lès-Lyon (FR)**
Inventeur : **Favre, Roger**
**19, rue Albéric Pont**
**F-69005 Lyon (FR)**
Inventeur : **Perrin, Patrice**
**39, rue Boileau**
**F-69006 Lyon (FR)**

(74) Mandataire : **Trolliet, Maurice et al**
**RHONE-POULENC CHIMIE Direction de la Propriété Industrielle Centre de Recherches des Carrières B.P. 62**
**F-69192 Saint-Fons Cédex (FR)**

EP 0 118 325 B2

## Description

La présente invention a pour objet des compositions organopolysiloxaniques durcissant en élastomères dès la température ambiante, portant des radicaux acyloxy liés à des atomes de silicium, et renfermant des accélérateurs de durcissement choisis dans le groupe constitué par les bydroxydes alcalins et alcalino-terreux.

Ces compositions, à l'opposé des compositions monocomposantes connues portant égalenent des radicaux acyloxy liés à des atomes de silicium (décrites en particulier dans les brevets français 1 198 749; 1 220 348; 2 429 811 et la demande de brevet européen EP A-102 268), ne sont pas stables au stockage mais leur durée de réticulation est beaucoup plus courte, par exemple de l'ordre de quelques minutes, jusqu'à 60 minutes. Elles doivent donc être préparées extemporanément.

Elles sont utilisables dans des domaines d'applications exigeant une durée de réticulation rapide, indépendante du taux d'humidité de l'atmosphère environnante, tels que la fabrication de joint "in-situ" dans l'industrie automobile.

Des compositions organopolysiloxaniques, portant des radicaux acyloxy liés à des atones de silicium, dont la durée de réticulation est indépendante de l'humidité de l'air ambiant sont connues; elles figurent dans le brevet anglais 1 308 985. Plus précisément ce brevet a pour objet un procédé de durcissement consistant â ajouter aux compositions précédentes de 3 â 15 % d'un silico-aluminate de sodium ayant de 5 à 10 % en poids d'eau adsorbée.

Ce procédé permet de fabriquer des pièces moulées en élastomère silicone par injection basse pression. Toutefois, le brevet 1 308 985 enseigne qu'il est nécessaire, pour atteindre des durées de durcissement relativement courtes, par exemple de l'ordre de 30 minutes, d'introduire des quantités importantes du silicoaluminate de sodium (15 % dans le tableau de la page 2); cela a l'inconvénient de dégrader les propriétés mécaniques des élastomères issus des compositions. En outre, le brevet n'indique pas les moyens à mettre en oeuvre pour obtenir des durées de réticulation plus courtes que 30 minutes.

Il se posait donc le problème de mettre au point des compositions organopolysiloxaniques portant des radicaux acyloxy liés à des atomes de silicium durcissant rapidement dès la temperature ambiante de façon indépendante de l'humidité de l'air et conduisant à des élastomères ayant de bonnes propriétés mécaniques.

Cet ensemble de propriétés permettrait, entre autres choses, d'utiliser les compositions pour le collage ou le jointoiement de pièces

(1) circulant sur des chaînes industrielles de montage

(2) ou pour lesquelles il n'existe pas d'aires de stockage disponibles qui assureraient leur durcissement complet.

La présente invention propose de nouvelles compositions ayant ces qualités recherchées.

La présente invention a ansi pour objet des compositions organopolysiloxaniques comprenant un polysiloxane polyhydroxylé, un polyacyloxysilane et un accélérateur de durcissement caractérisées en ce que l'accélérateur de durcissement est un hydroxyde alcalin ou alcalino-terreuxi.

Plus spécifiquement la présente invention a pour objet des compositions organopolysiloxaniques réticulant en élastomères des la température ambiante, comprenant au moins:

A - 100 parties de polyméres principalement

α-ω di (hydroxy)diorganopolysiloxaniques, de viscosité 700 à 1 000 000 mPa.s à 25°C, constitués chacun d'une succession de motifs diorganosiloxy de formule $R_2SiO$ dans laquelle les symboles R, identiques ou différents, représentent des radicaux hydrocarbonés ayant de 1 à 8 atomes de carbone, substitués ou non par des atomes d'halogènes, de groupes cyano.

B - 2 à 20 parties d'agents réticulants de formule générale $R_pSi(OCOR')_{4-p}$

dans laquelle le symbole R a la signification donnée sous (A), le symbole R', représente un radical hydrocarboné exempt d'insaturation aliphatique, ayant de 1 à 15 atomes de carbone et le symbole p représente zéro ou uni.

C - 0 a 150 parties de charges minérales

D - 0,05 à 7 parties, pour 100 parties de A + B + C, d'accélérateurs de durcissement

caractérisées en ce que les accélérateurs (D) sont choisis parmi les hydroxydes alcalins ou alcalino-terreux.

Les hydroxydes alcalins ou alcalino-terreux peuvent être anhydres ou hydratés. Il peut s'agir notamment selon une variante préférée de la présente invention d'hydroxydes de lithium, de baryum, de strontium, de caldium, anhydres ou hydratés.

Les polymères (A) de viscosité 700 à 1 000 000 mPa.s à 25°C, de préférence 1 000 à 700 000 mPais à 25°C, sont des polymères essentiellement linéaires, constitués de motifs diorganosiloxy de formule précitée $R_2SiO$, et bloqués à chaque extrémité de leur chaine par un groupe hydroxyle; toutefois la présence de motifs monoorganosiloxy de formule $RSiO_{1,5}$ et/ou de motifs siloxy de formule $SiO_2$, n'est pas exclue dans la proportion d'au plus 2 % par rapport au nombre de motifs diorganosiloxy.

Les radicaux hydrocarbonés, ayant de 1 à 8 atomes de carbone, substitués ou non par des atomes d'halogènes ou des groupes cyano, et représentés par les symboles R, peuvent être choisis parmi:

- les radicaux alcoyles et halogénoalcoyles ayant de 1 à 8 atomes de carbone tels que les radicaux méthyles, éthyles, n-propyles, isopropyles, n-butyles, n-pentyles, n-hexyles, éthyl-2 hexyles, n-octyles, trifluoro-3,3,3 propyles, trifluoro-4,4,4 butyles, pentafluoro-4,4,4,3,3 butyles
- les radicaux cycloalcoyles et halogénocycloalcoyles ayant de 4 à 8 atomes de carbone tels que les radicaux cyclopentyles, cyclohexyles, méthylcyclohexyl difluoro-2,3 cyclobutyles, difluoro-3,4 méthyl-5 cycloheptyles
- les radicaux alcényles ayant de 2 à 4 atomes de carbone tels que les radicaux vinyles, allyles, butène-2 yles
- les radicaux aryles et halogénoaryles avant de 6 à 8 atomes de carbone tels que les radicaux phényles, tolyles, xylyles, chlorophényles, dichlorophényles, trichlorophényles
- les radicaux cyanoalcoyles dont les chainons alcoyles ont de 2 à 3 atomes de carbone tels que les radicaux β-cyanoéthyles et γ -cyanopropyles.

A titre d'exemple de motifs représentés par la formule $R_2SiO$ on peut citer ceux de formules:

$$(CH_3)_2SiO$$
$$CH_3(CH_2{=}CH)SiO$$
$$CH_3(C_6H_5)SiO$$
$$(C_6H_5)SiO$$
$$CF_3CH_2CH_2(CH_3)SiO$$
$$NC\text{-}CH_2CH_2(CH_3)SiO$$
$$NC\text{-}CH(CH_3)CH_2(CH_2{=}CH)SiO$$
$$NC\text{-}CH_2CH_2(C_6H_5)SiO$$

Il doit être compris, selon une variante de l'invention, que l'on peut utiliser comme polymères (A) des copolymères ou un mélange constitué de polymères α - ω di(hydroxy)diorganopolysiloxaniques qui diffèrent entre eux par le poids moléculaire et/ou la nature des groupements liés aux atomes de silicium.

Ces copolymères α - ω di(hydroxy)diorganopolysiloxaniques (A) sont commercialisés; en outre, ils peuvent être aisément fabriqués. L'une des techniques de fabrication les plus courantes consiste, dans une première phase, à polymériser des diorganocyclopolysiloxanes à l'aide de quantités catalytiques d'agents alcalins ou acides puis à traiter les polymérisats avec des quantités calculées d'eau (brevets français 1 134 005; 1 198 749; 1 226 745); cet apport d'eau, qui est d'autant plus élevé que les polymères à préparer ont une viscosité pius faible, peut être remplacé en totalité ou en partie par des huiles α - ω di(hydroxy)diorganopolysiloxaniques de faible viscosité, par exemple allant de 5 à 200 mPa.s à 25°C, ayant un taux élevé de radicaux hydroxyles, par exemple de 3 à 14%.

Les agents réticulants (B) sont employés à raison de 2 à 20 parties de préférence de 3 à 15 parties, pour 100 parties des polymères α - ω di(hydroxy)diorganopolysiloxaniques (A).

Ils répondent à la formule précitée $R_pSi(OCOR')_{4-p}$

dans laquelle, comme déjà indiqué, le symbole R a la signification donnée sous (A), le symbole R' représente un radical hydrocarboné exempt d'insaturation aliphatique ayant de 1 à 15 atomes de carbone et le symbole p représente zéro ou 1.

Des précisions ont été déjà fournies sur la nature des radicaux représentés par le symbole R. Quant au symbole R' il représente un radical choisi dans le groupe constitué:

- des radicaux alcoyles ayant de 1 à 15 atomes de carbone tels que les radicaux méthyles, éthyles, n-propyles, n-butyles, n-pentyles, éthyl-1 pentyles, n-hexyles, éthyl-2 hexyle, n-octyles, néodécyles, n-décyles, n-dodécyles, n-pentadécyles
- des radicaux cycloalcoyles ayant de 5 à 6 atomes de carbone nucléaire tels cue les radicaux cyclopentyles et cyclohexyles
- des radicaux aryles ayant de 6 à 8 atomes de carbone tels que les radicaux phényles, tolyles, xylyles

A titre d'exemples d'agents réticulants (B), peuvent être dités ceux répondant aux formules suivantes:

$$CH_3Si(OCOOH_3)_3$$
$$C_2H_5Si\text{-}(OCOOH_3)_3$$
$$CH_2{=}CHSi(OCOCH_3)_3$$
$$C_6H_5Si\text{-}(OCOCH_3)_3$$
$$CH_3Si[OCOCH(C_2H_5)(CH_2)_3\text{-}CH_3]_3$$
$$CF_3CH_2CH_2Si(OCOC_6H_5)_3$$
$$CH_3Si(OCOC_6H_5)_3$$

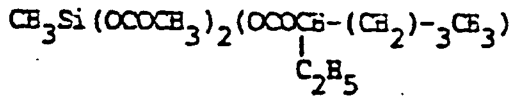

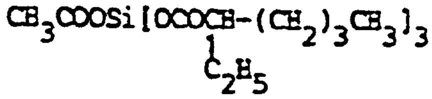

Il est clair que l'on peut remplacer dans les compositions de l'invention les constituants A et B par les produits dévolatilisés provenant de la réaction stoechimétrique de A sur B conformément au procédé décrit dans le brevet français 1.220.348.

Si l'on utilise un agent réticulant (B) dont les radicaux acyloxy sont de faible masse moléculaire comme par exemple le méthyltriacétoxysilane, il se forme lors de la réticulation un acide organique de faible masse moléculaire. généralement volatile aux températures usuelles de réticulation et qui s'élimine par évaporation de l'élastomère et éventuellement peut être alors à l'origine de phénomènes de corrosion et de pertes d'adhérence, en particulier lorsque la composition est déposée sur des supports métalliques. Par contre, si l'on utilise un agent réticulant B dont les radicaux acyloxy sont de masse moléculaire plus élevés, comme par exemple le méthyl tris (éthyl-2 hexanoyloxy) silane, il se forme de l'acide éthyl-2 hexanoïque qui n'est pas volatile aux températures usuelles de réticulation et qui reste dans l'élastomère, ce qui constitue un grave inconvénient, car l'élastomère présente alors une mauvaise tenue à chaud avec notamment une mauvaise DRC (Déformation rémanente à la compression). En outre, l'acide restant dans l'élastomère est à l'origine de phénomènes de corrosion et de pertes d' adherence, en particulier lorsque la composition est déposée sur des supports métalliques.

Un des avantages trés important de l'utilisation des accélérateurs D conformes à l'invention réside précisément en ce que, compte tenu de leur basicité, ils neutralisent les acides formes au cours de la réticulation, ce qui supprime les inconvénients inhérents à la présence de ces acides. Il est donc particulièrement avantageux d'utiliser l'accélérateur D suivant une quantité au moins stoechiométrique par rapport à la quantité d'acide pouvant être formé lors du durcissement de la composition.

Avec ces agents réticulants (B) peuvent être associés des silanes portant seulement chacun deux groupes hydrolysables; ces silanes répondent à la formule;

$R''_2Si(OCOR')_2$ dans laquelle les symboles R' ont la signification du symbole R' de la formule

$$R_pSi(OCOR')_{4-p}$$

et les symboles R" ont la signification du symbole R de cette même formule ou représente un radical tertiobutoxy de formule $(CH_3)_3C\text{-}O\text{-}$.

A titre d'exemples de ces silanes, peuvent être cités ceux de formules ci-après:

$$(CH_3)_2Si(OCOCH_3)_2$$
$$CH_2 = CH(CH_3)Si(OCOCH_3)_2$$
$$(C_6H_5)_2Si(OCOCH_3)_2$$
$$[(CH_3)_3C\text{-}O]_2Si(OCOCH_3)_2$$
$$(CH_3)_2Si[OCOCH(C_2H_5)(CH_2)_3CH_3]_2$$
$$[(CH_3)_3CO]_2Si[OCOH(C_2H_5)\ (CH_2)_3CH_3]_2$$

La quantité molaire mise en ceuvre des silanes de formule

$$R''_2Si(OCOR')_2$$

par rapport à celle mise en oeuvre des silanes réticulants (B) de formule $R_pSi(OCOR')_{4-p}$ n'est pas étroitement définie, il est nécessaire cependant qu'elle ait une limite supérieure de manière que le mélange des 2 types de silanes renferme toujours en moyenne au moins 2,5 groupes -OCOR' pour un atome de silicium.

Ainsi en prenant par exemple 1 mole du silane réticulant (B) de formule $RSi\ (OCOR')_3$ (avec p = 1), il faut lui associer au plus 1 mole du silane $R''_2Si\ (OCOR')_2$; de même en prenant 1 mole du silane réticulant (B) de formule $Si\ (OCOR')_4$ (avec p = 0) il faut lui assodier au plus 3 moles de silane $R''_2Si(OCOR')_2$.

Le rôle principal des silanes de formule $R''_2Si(OCOR')_2$ est celui de coupler les chaînes des polymères $\alpha$ - $\omega$ di(hydroxy)diorganopolysiloxaniques (A) ce qui permet d'obtenir des élastomères ayant de bonnes caractéristiques physiques en partant de compositions renfermant des polymères (A) dont la viscosité est relativement faible, par exemple allant de 700 à 5 000 mPa.s à 25° C.

Les charges minérales (C) sont utilisées à raison de 0 à 150 parties, de préférence 5 à 120 parties, pour 100 parties des polymères $\alpha$ - $\omega$ di(hydroxy)diorganopolysiloxaniques (A). Ces charges peuvent se présenter sous la forme de produits très finement divisés dont le diamètre particulaire moyen est inférieur à 0,1 $\mu$m. Parmi

ces charges figurent les silices de combustion et les silices de précipitation; leur surface spédifique est généralement supérieure à 40 $m^2/g$, et se situe le plus souvent dans l'intervalle 150 - 200 m2/g.

Ces charges peuvent également se présenter sous la forme de produits plus grossièrement divisés, de diamètre particulaire moyen superiéur à 0,1 $\mu$ m. Comme exemples de telles charges, on peut citer le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum; leur surface spécifique est généralement inférieure à 30 m2/g.

Des charges (C) peuvent avoir été modifiées en surface, par traitement avec les divers composés organosilidiques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysilazanes (brevets français 1 126 884, 1 136 885, 1 236 505, brevet anglais 1 024 234). Les charges traitées renferment, dans la plupart des cas, de 3 à 30% de leur poids de composés organosiliciques.

Les charges (C) peuvent être constituées d'un mélange de plusieurs types de charges de granulométrie différente; ainsi par exemple, elles peuvent être constituées de 30 à 70 % de silices finement divisées de surface spécifique supérieure à 40 m2/g et de 70 à 30 % de silices plus grossièrement divisées de surface spécifique inférieure à 30 m2/g.

Les hydroxydes alcalins ou alcalino-terreux mis en oeuvre en tant qu'accélérateurs (D), sont utilisés à raison de 0,05 à 7 parties, de préférence 0,05 à 5 parties, pour 100 parties de la somme des constituants A, B, C. Ils sont choisis préférentiellement dans le groupe constitué des hydroxydes de lithium, de baryum, de strontium et de calcium, anhydres ou hydratés. Ces hydroxydes répondent à l'état anhydre aux formules: LiOH, $Ba(OH)_2$, $Sr(OH)_2$, $Ca(OH)_2$.

Les hydroxydes hydratés sont représentés plus spécialement par les formules:

$$LiOH.H_2O$$
$$Ba(OH)_2.H_2O$$
$$Ba(OH)_2.8H_2O$$
$$Sr(OH)_2.H_2O$$
$$Sr(OH)_2.8H_2O$$

Il faut comprendre que les quantités utilisées des hydroxydes sont basées sur le poids des hydroxydes nus, sans la prise en compte de l'eau de cristallisation éventuelle. Ces hydroxydes peuvent être introduits tels quels ou sous la forme d'empâtages ce qui facilite leur mélange avec les autres constituants. Ces empâtages peuvent être constitués d'une huile silicone telle qu'un polymère $\alpha$ - $\omega$ bis (triméthylsiloxy)diméthylpolysiloxanique de viscosité variable allant par exemple de 500 à 100 000 mPa.s à 25°C, et éventuellement d'une ou plusieurs charges minérales représentant au plus 15% du poids de l'huile.

Préférentiellement pour augmenter l'activité des hydroxydes anhydres ou hydratés on ajoute de l'eau ou un composé libérant de l'eau lors de la réticulation, l'eau étant présente au moment de la réticulation en quantité d'au moins 0,05% et de préférence d'au moins 0,10 % par rapport au poids des hydroxydes nus; la limite supérieure n'est pas étroitement déterminée, néanmoins il est inutile de dépesser 35% du poids des hydroxydes nus car l'excès d'eau en accélérant trop brutalement le durcissement des compositions pourrait avoir des répercussions néfastes sur les propriétés mécaniques des élastomères obtenus. Par ailleurs de telles compositions durcissant trop vite seraient presque impossible à mettre en oeuvre.

L'eau peut être introduite à un moment quelconque de la préparation des compositions conformes à l'invention; en particulier elle peut être mélangée directement avec les hydroxydes ou avec les empâtages les contenant. Si l'on prend soin, ou si l'on a la possibilité de chauffer les empâtages contenant notamment les hydroxydes de lithium, baryum et strontium, à l'état hydraté, à une température dépessant 100°C, par exemple, allant de 100 à 180°C pendant au moins 30 minutes, il se produit bien souvent une libération d'une partie ou de la totalité de l'eau d'hydratation. Cette eau, dispersée dans l'empâtage, se comporte comme de l'eau introduite et, il n'est donc plus nécessaire éventuellement d'en ajouter.

Les compositions organopolysiloxaniques conformes à l'invention, peuvent comporter, en dehors des constituants A, B, C, D, des catalyseurs de durcissement habituellement choisis dans le groupe constitué:

- des sels métalliques d'acides cartoxyliques, de préférence des sels d'organoétains d'acides carboxyliques tels que le diacétate et le dilaurate de dibutylétain
- des produits de réaction des sels d'organoétains d'acides carboxyliques avec les esters titaniques (brevet américain 3 409 753)
- des dérivés organiques du titane et du zirconium tels que les esters titaniques et zirconiques (EP-A- 102 268).

Ces catalyseurs de durcissement sont utilisés habituellement à raison de 0,0004 à 6 parties, de préférence

de 0,0008 à 5 parties pour 100 parties des polymères α - ω di(hydroxy)diorganopolysiloxaniques (A).

Les compositions organopolysiloxaniques peuvent comporter également des adjuvants et additifs usuels, comprenant en particulier des stabilisants thermiques. Ces derniers produits, qui, par leur présence, améliorent la résistance thermique des élastoméres silicones, peuvent être choisis parmi les sels, oxydes et hydroxydes de terres rares (et plus spécialement parmi les oxydes et hydroxydes cériques) ou parmi les oxydes de titane et de fer obtenus, de préférence, par combustion.

Avantageusement les compositions selon l'invention contiennent de 0,1 à 15 parties, et de préférence de 0,15 à 12 parties, de stabilisants thermiques pour 100 parties de polyméres α - ω di(hydroxy)diorganopolysiloxaniques (A).

Comme autres additifs peuvent être mentionnés des composés améliorant la résistance à la flamme; ils sont choisis de préférence parmi les dérivés organiques du phosphore, les composés organiques halogénés, les dérivés organiques et minéraux de platine.

Outre les constituants principaux A, B, C, D et les additifs précités, des composés organopolysiloxaniques particuliers peuvent être introduits dans le dessein d'agir sur les caractéristiques physiques des compositions conformes à l'invention et/ou sur les propriétés mécaniques des élastomères issus du durcissement de ces compositions.

Ces composés organopolysiloxaniques sont bien connus; ils comprement plus spécialement:

(1f) des polymères

α - ω bis (triorganosiloxy)diorganopolysiloxaniques et/ou α (hydroxy), ω (triorganosiloxy)diorganopolysiloxaniques, de viscosités d'au moins 10 mPa.s à 25°C, formés essentiellement de motifs diorganosiloxy et d'au plus 1% de motifs monoorganosiloxy et/ou siloxy, les radicaux organiques liés aux atomes de silidium étant choisis parmi les radicaux méthyles, vinyles, phényles, 60% au moins de ces radicaux organiques étant des radicaux méthyles et 10% au plus étant des radicaux vinyles.

La viscosité de ces polymères peut atteindre plusieurs dizaines de millions de mPa.s à 25°C; ils comprennent donc des huiles d'aspect fluide à visqueux et des gommes molles à dures. Ils sont préparés selon les techniques usuelles décrites plus précisément dans les brevets français 978 058, 1 025 150, 1 108 764, 1 370 884. On utilise de préférence les huiles α - ω -bis (triméthylsiloxy)diméthylpolysiloxaniques de viscosité allant de 10 mPa.s à 1 000 mP-a.s à 25°C. Ces polymères qui jouent le rôle de plastifiants peuvent être introduits à raison d'au plus 150 parties, de préférence de 5 à 120 parties, pour 100 parties des polymères α - ω -di(hydroxy)diorganopolysiloxaniques (A).

(2f) des polymères méthylpolysiloxaniques ramifiés, liquides, ayant de 1,4 à l,9 radical méthyle par atome de silicium constitués d'une combinaison de motifs de formules:

$$(CH_3)_3SiO_{0,5}$$
$$(CH_3)_2SiO \text{ et}$$
$$CH_3SiO_{1,5}$$

ils renferment de 0,1 à 8% de groupes hydroxyles. Ils peuvent être obtenus par hydrolyse des chlorosilanes correspondants comme l'enseignent les brevets français 1 408 662 et 2 429 811. On utilise, de préférence, des polymères ramifiés dont les motifs sont répartis, selon les rapports suivants:

$$(CH_3)_3SiO_{0,5}/(CH_3)_2SiO = 0,01 \text{ à } 0,15$$
$$\text{et } CH_3SiO_{1,5}/(CH_3)_2SiO = 0,1 \text{ à } 1,5$$

Ces polymères peuvent être introduits à raison d'au plus 70 parties, de préférence de 3 à 50 parties, pour 100 parties des polymères

α - ω -di(hydroxydiorganopolysiloxaniques (A). Ils apportent les propriétés de thixotropie notamment avec les silices traitées.

(3f) des huiles diorganopolysiloxaniques bloquées par des groupes hydroxyles et/ou alcoxyles inférieurs ayant de 1 à 4 atomes de carbone, de faible viscosité en général comprise dans l'intervalle 2 mPa.s à 4 000 mPa.s à 25°C (si ces huiles sont bloquées uniquement par des groupes hydroxyles leur viscosité est inférieure à 700 mPa.s à 25°C); les radicaux organiques liés aux atomes de silicium de ces huiles sont, comme précédemment, choisis parmi les radicaux méthyles, vinyles, phényles, 40 % au moins de ces radicaux étant des radicaux méthyles et 10 % au plus étant des radicaux vinyles.

Comme groupes alcoxyles inférieurs bloqueurs de chaîne peuvent être cités les groupes méthoxyles, éthoxyles, isopropoxyles, n-propoxyles, n-butoxyles, isobutoxyles, tertioburoxyles. Les taux en groupes hydroxyles et/ou alcoxyles s'étalent généralement de 0,5 à 20 %. Ces huiles sont préparées selon des techniques usuelles décrites plus précisément dans les brevets français 938 292, 1 104 674, 1 116 196,1 278 281, 1 276 619. Le préférence, on utilise des huiles α - ω dihydroxydiméthylpolysiloxaniques de viscosité 10 à 300 mPa.s à 25°C, des huiles α - ω -dihydroxyméthylphénylpolysiloxaniques de viscosité 200 à 600 mPa.s à 25°C, et des huiles α - ω -diméthoxy(ou diéthoxy) diméthylpolysiloxaniques de viscosité 30 à 2 000 mPa.s à 25°C. Elles peuvent être introduites à raison d'au plus 50 parties, de préférence de 2

à 40 parties, pour 100 parties des polymères α - ω -di(hydroxy)diorganopolysiloxaniques (A). Ces huiles permettent de réduire la viscosité globale et sont considérés selon l'expressi on usuelle comme des "process aid".

(4f) des composés organosiliciques hydroxylés choisis parmi les composés répondant à la formule générale

$$Z'SiZ_2(OSiZ_2)_wOH,$$

qui sont solides à la température ambiante. Dans cette formule les symboles Z, identiques ou différents, représentent des radicaux méthyles, éthyles, n-propyles, vinyles, phényles; le symbole Z' représente un radical hydroxyle où Z et le symbole w représente zéro, 1 ou 2. A titre d'exemples concrets de ces composés peuvent être cités: le diphénylsilane diol, le méthylphénylsilanediol, le diméthylphénylsilanol, le tétraméthyl-1,1,3,3 disiloxanediol, le diméthyl-1,3 diphényl-1,3 disiloxanediol, le tétraméthyl-l, 1,5,5 diphényl-3,3 trisiloxanediol. Ils peuvent être introduits à raison d'au plus 30 parties, de préférence 0,5 à 20 parties, pour 100 parties des polymères α - ω -di(hydroxy)diorganopolysiloxaniques (A). Il confèrent des propriétés thixotropantes au milieu qui en général se gélifie légèrement sous leur action Les polyméres α - ω -bis(triorganosiloxy)diorganopolysiloxaniques et/ou α- (hydr oxy ω- (triorganosiloxy)diorganopolysiloxaniques décrits sous (1f) peuvent être remplacés, totalement ou partiellement, per des composés organiques inertes vis-à-vis des censtituants A, B, C, D et miscibles au moins avec les polymères α - ω -di(hydroxy)diorganopolysiloxaniques (A). Comme exemples de ces composés organiques peuvent être mentionnés les polyalcoylbenzènes obtenus par alcoylation du benzène à l'aide d'oléfines à longue chaîne, en particulier des oléfines à 12 atomes de carbone issues de la polymérisation du propylène. Les composés organiques de ce type figurent par exemple dans les brevets français 2 392 476 et 2 446 848.

Les compositions selon l'invention peuvent être éventuellement utilisées après dilution dans des composés organiques liquides, les diluants sont de préférence des produits usuels commercialisés choisis parmi:

- les hydrocarbures aliphatiques, cycloaliphatiques, aromatiques, halogénés ou non, tels que le n-heptane, le n-octane, le cyclohexane, le méthylcyclohexane, le toluène, le xylène, le mésitylène, le cumène, la tétraline, le perchloroéthylène, le trichloroéthane, le tétrachloroéthane, le chlorobenzène, l'orthodichlorobenzéne
- les cétones aliphatiques et cycloaliphatiques tels que la méthyléthylcétone, la méthylisobutylcétone, la cyclohexanone, l'isophorone
- les esters tels que l'acétate d'éthyle, l'acétate de butyle, l'acétate d'éthylglycol.

La quantité de diluant demeure en général peu importante, elle est en général inférieure à 50 %.

La préparation des compositions conformes à l'invention peut avoir lieu en une seule étape, par brassage dans un réacteur approprié de l'ensemble des constituants A, B, C, D et éventuellement des additifs et adjuvants précités. L'ordre d'introduction de ces composés, dans le réacteur peut être quelconque il est toutefois préférable d'ajouter les accélérateurs D après tous les autres composés de manière à éviter un durcissement prématuré de la masse.

La préparation des compositions peut également avoir lieu en 2 étapes. Selon cette technique qui constitue un objet de la présente invention des compositions monocomposantes sont tout d' abord préparées par mélange à l'abride l'humidité des constituants A, B, C et éventuellement des additifs et adjuvants usuels. Elles sont stables au stockage et durcissent seulement par exposition à l'air humide. Il est bien évident que de telles compositions pourraient, le cas échéant, être utilisées seules et leur durcissement ou réticulation, se développerait alors à partir des surfaces en contact avec l'air ambiant et se poursuivrait progressivement vers l'intérieur de la masse. La durée de leur durcissement complet serait relativement lente et dépendrait principalement de l'épaisseur des couches déposées et du degré hygrométrique de l'atmosphère entourant les compositions. Il faudrait ainsi généralement une période de 24 heures à la température ambiante, avec un degré hygrométrique de 60% pour réticuler correctement une couche de 4 mm d'épaisseur.

Dans une deuxième étape, on ajoute et homogénéise au moment de l'emploi, à ces compositions monocomposantes, les accélérateurs de durcissement D. Les compositions obtenues, conformes à l'invention, doivent être utilisées rapidement puisque leur durdissement, à l'opposé de celui des compositiens monocomposantes, se développe dans toute la masse. La durée de leur durcissement complet est très variable étant donné qu'elle dépend de la nature et des quantités mises en oeuvre des accélérateurs D, de la présence ou non d'eau et de la forme sous laquelle cette eau est introduite. En jouant sur ces divers paramètres il est possible d'obtenir des temps de durcissment s'échelonnant de quelques minutes à 60 minutes, ou plus. La température est aussi un paramètre important; en effet, des variations de la valeur de la température ont des répercussions très nettes sur la vitesse de durdissement. Si la température augmente (les variations sont positives) la durée de durcissement est réduite; dans le cas contraire la durée est augmentée.

Ainsi des réductions de durée de durcissement de moitié et parfois beaucoup plus peuvent être obtenues en exposant des compositions à des températures s'échelonnant par exemple de 50 à 200°C au lieu de les

abandonner à la température ambiante, c' est-à-dire comprise dans l'intervalle 15 - 25°C.

Un autre objet de la présente invention est constitué par l'utilisation des compositiens à durcissement rapide pour l' obtention de joints.

Les compositions conformes à l'invention peuvent être employées pour de multiples applications comme le jointoiement dans l'industrie du bâtiment, l'assemblage des matériaux les plus divers (métaux, matières plastiques, caoutchoucs naturels et synthétiques, bois, cartons, faïence, brique, céramique, verre, pierre, béton, éléments de maçonnerie), l'isolation de conducteurs électriques, l'enrobage de circuits électroniques, la préparation de moules servant à la fabrication d'objets en résines ou mousses synthétiques.

En outre, elles conviennent plus spécialement pour la formation de joints "in-situ" utilisés dans l'industrie automobile. Ces joints "in-situ" englobent plusieurs types, à savoir les joints "écrasés", les joints "en forme" et les joints "injectés".

Les joints "écrasés" sont formés à la suite de l'application d'un cordon pâteux des compositions sur la zone de contact entre 2 éléments métalliques à assembler. La cordon pâteux est d'abord déposé sur l'un des éléments puis l'autre élément est aussitôt appliqué sur le premier; il en résulte un écrasement du cordon avant qu'il ne se transforme en élastomère. Ce type de joints s'adresse à des assemblages ne devant pas être couramment démontés (joints de carter d' huile, joints de carter de distribution).

Les joints "en forme" sont également obtenus à la suite de l'application d'un cordon pâteux des compositions sur la zone de contact entre 2 éléments à assembler. Toutefois, après la dépose du cordon pâteux sur l'un des éléments on attend le durcissement complet du cordon en élastomère et à ce moment-là seulement applique le deuxième élément sur le premier. Il en résulte qu'un tel assemblage est aisément démontable puisque l'élément qui est appliqué sur celui ayant reçu le joint, n'adhère pas à ce joint. Par ailleurs le joint, par son caractère caoutchouteux, épouse toutes les irrégularités des surfaces à jointoyer de ce fait, il est inutile (1) d'usiner soigneusement les surfaces métalliques devant être mises en contact les unes avec les autres et (2) de serrer avec force les assemblages obtenus; ces particularités permettent de supprimer dans une certaine mesure, des joints de fixation, des entretoises, des nervures destinés habituellement à raidir et renforcer les éléments des assemblages.

Comme les compositions conformes à l'invention durcissent rapidement dés la température ambiante, en présence ou en l'absence d'humidité, en milieu confiné, ou à l'air ambiant il en résulte que les joints "en forme" (et aussi les autres joints "in-situ") découlant du durcissement de ces compositions peuvent être fabriqués dans des conditions très contraignantes. Ils peuvent, par exemple, être fabriqués sur les chaînes de montage usuelles de l'industrie automobile munies d'un appareil automatique de dépose des compositions. Cet appareil automatique possède bien souvent une tête mélangeuse equipée d'une buse de dépose, celle-ci se déplaçant selon le profil des joints à fabriquer. La tête mélangeuse peut recevoir la composition polysiloxanique monocomposante et l'accélérateur, elle peut disposer également d'une troisième entrée permettant d'introduire un solvant servant à rincer l'installation après usage (cyclohexane).

Les compositions, fabriquées et distribuées au moyen de cet appareil, doivent avoir une durée de durcissement bien ajustée pour d'une part éviter des prises en masse dans la tête mélangeuse et d'autre part obtenir une réticulation complète après la fin de la dépose du cordon pâteux sur les piéces à jointoyer. Ces joints "en forme" conviennent plus spécialement pour les joints de couvre-culbuteurs, de couvercles de boîtes à vitesses, d'entretoises de distribution et même de carters d'huile.

Les joints injectés sont formés en milieu confiné, dans des cavités souvent complètement closes; les compositions placées dans ces cavités se transforment rapidement en élastomères dont les propriétés sont identiques à celles d'élastomères découlant du durcissement des compositions à l'air ambiant. Ces joints peuvent assurer par exemple l'étanchéité des paliers de vilbrequins.

Les compositions conformes à l'invention conviennent également pour la formation de joints à durcissement rapide dans d'autres domaines cue l'automobile. Ainsi elles peuvent servir à coller et à jointoyer des armoires électriques en matière plastique, à produire des joints pour aspirateurs et pour fers à repasser à la vapeur.

Les élastomères issus du durcissement des compositions conformes à l'invention ont des propriétés mécaniques identiques à celles des élastomères issus des compositions monocomposantes connues donc formées par simple mélange des constituants A, B, C et éventuellement d'additifs usuels sans l' introduction des accélérateurs D. En particulier, les déformations rémanentes à la compression sont relativement faibles, de l'ordre par exemple de 8 à 35%; en outre, la réticulation complète mesurée par la dureté Shore A est obtenue dès la fin des temps de réticulation précédemment mentionnés lesquels s'étendent généralement de quelques minutes à 60 minutes, parfois plus mais jamais au-delà de 3 heures. Dans le cas des compositions monocomposantes, la réticulation complète demande dans les conditions les plus favorables, au moins une dizaine d'heures. Par ailleurs, la simple introduction d'eau dans les compositions monocomposantes, bien qu' elle accélère sensiblement le processus de durcissement, ne permet pas de les réticuler correctement; en général,

la dureté Shore A définitive est de 15 à 40% plus faible que celle obtenue sans eau ou avec l'accélérateur D.

**Exemple 1**

On prépare une composition $C_1$ durcissant dès la temperature ambiante en élastomère, par mélange des constituants suivants:

- 100 parties d'une huile
  $\alpha$ - $\omega$ di(hydroxy)diméthylpolysiloxanique de viscosité 4 000 mPa.s à 25°C
- 20 parties d' une silice de combustion de surface spécifique 200 m2/g
- 20 parties de quartz broyé de diamètre particulaire moyen 5 microns
- 20 parties d'oxyde de titane du type rutile de diamètre particulaire moyen 8 microns
- 1 partie d'une huile
  $\alpha$ - $\omega$ di(hydroxy)méthylphénylpolysiloxanique de viscosité 350 mPa.s à 25°C
- 6 parties de méthyl(triacétoxy)silane

Cette composition $C_1$ est dispersée dans 72 parties de cyclohexane anhydre. On obtient ainsi une dispersion homogène $D_1$ renfermant sensiblement 70 % de la composition $C_1$. Cette dispersion est stockée dans des récipients en aluminium étanches à l'humidité; elle ne montre aucune modification d'aspect après 6 mois de stockage.

On prépare d'autre part 7 empâtages renfermant chacun un accélérateur de durcissement de la compostion $C_1$. La nature des constituants, ainsi que les quantités utilisées, exprimées en % en poids, de ces empâtages, figurent ci-après dans le tableau:

| CONSTITUANTS DE CHAQUE EMPATAGE | $A_1$ | $A_2$ | $A_3$ | $A_4$ | $A_5$ | $A_6$ | $A_7$ |
|---|---|---|---|---|---|---|---|
| Huile $\alpha$—$\omega$ bis (triméthylsiloxy) diméthylpolysiloxanique de viscosité 30 000 mPa. s à 25°C | 69.8 | 79,7 | 71,8 | 68,9 | 64,3 | 78,1 | 89,4 |
| Silice de combustion de surface spécifique 200 m²/g | 0,8 | 0,9 | 0,8 | 0,8 | 0,7 | 3,1 | 5,3 |
| $Ca(OH)_2$ (accélérateur) | 28,8 | 19,1 | 27,1 | 30,1 | 35 | | |
| $LiOH-H_2O$ (accélérateur) | | | | | | | 5 (soit 2,85 de LiOH) |
| $Ba(OH)_2 8.H_2O$ (accélérateur) | | | | | | 18,8 (soit 10,2 de $Ba(OH)_2$) | |
| Eau introduite | 0,60 | 0,3 | 0,3 | 0,2 | 0 | 0 | 0,3 |

On introduit dans un récipient cylindrique en plastique, de volume 500 cm³ tout d'abord 10 g de l'un des 7 empâtages puis 200 g de la dispersion $D_1$; on malaxe aussitôt le contenu du récipient à l'aide d'une spatule et poursuit ce malaxage pendant environ 1 mn. 15 s; on verse ensuite rapidement le mélage dans un flacon cylindrique en verre de volume 125 cm³, equipé d'un couvercle percé de 2 trous, l'un des trous permettant le passage d'un courant d'azote sec, l'autre assurant le passage de l'aiguille n° 7 d'un viscosimètre Brookfield.

Après la fermeture du couvercle, la mise en place de l'aiguille du viscosimètre et le branchement de l'arrivée d'un courant d'azote sec, on met en marche la rotation de l'aiguille du viscosimetre à la vitesse de 2,5 tours par minute. La periode de temps comprise entre le début du malaxage à la soatule et le début de la rotation de l'aiguille du viscosimétre est de 2 min.

On suit l'évolution de la viscosité du mélange contenu dans le flacon en verre en fonction du temps et arrête la rotation de l'aiguille lorsque la lecture du cadran du viscosimètre indique une viscosité de $16.10^5$ mPa.s à 25°C.

La tableau ci-après rassemble les données relatives aux quantités d'accélerateurs utilisés en % par rapport à la composition $C_1$ et aux quantités d'eau introduites en % par rapport aux accélérateurs. Les quantités ex-

primées en % sont basées sur les hydroxydes nus (ou anhydres) sans la prise en compte dans les calculs de l'eau de cristallisation, ou d'hydratation éventuelle de ces hydroxyles.

Le tableau rassemble en outre les temps nécessaires pour atteindre une viscosité de $16.10^5$ mPa.s à 25°C.

| EMPATAGES AJOUTES A LA DISPERSION $D_1$ | $A_1$ | $A_2$ | $A_3$ | $A_4$ | $A_5$ | $A_6$ | $A_7$ |
|---|---|---|---|---|---|---|---|
| Quantité de l'accélérateur en % de la composition $C_1$ | 2,05 | 1,36 | 1,93 | 2,15 | 2,5 | 0,73 | 0,20 |
| Quantité d'eau introduite en % de l'accélérateur | 2,08 | 1,57 | 1,1 | 0,66 | 0 | 0 | 10,52 |
| Temps pour atteindre $16-10^5$ mPa. s à 25°C | 19 min 30s | 45 min | 20 min 30 s | 45 min | 85 min | 10 min | 11 min |

On constate que l'évolution de la viscosité dans la masse du mélange est nette dans tous les cas. Elle varie cependant en fonction de la nature et de la quantité utilisée de l'accélérateur ainsi que de la quantité introduite d'eau.

**Exemple 2**

On prépare un empâtage per malaxage de:

- 100 parties d'une huile α - ω bis (triméthylsiloxy)diméthylpolysiloxanique de viscosité 30 000 mPa.s à 25°C
- 2 parties d'une silice de combustion de surface spécifique 200 m2/g
- 17,6 parties de chaux de formule $Ca(OH)_2$ de diamétre particulaire moyen 6 μ m.

On incorpore 5 parties de cet empâtage (soit 0,73 parties de chaux) dans 100 parties de la composition $C_2$ elle même obtenue par mélange des constituants suivants:

- 100 parties d'une huile α - ω di(hydroxy)diméthylpolysiloxanique de viscosité 7 000 mPa.s à 25°C
- 10 parties d'une silice de combustion de surface spécifique 150 m2/g
- 85 parties d' une silice de diatomées de diamètre particulaire moyen 5 microns
- 4 parties d'une huile α- ω di(hydroxy)diméthylpolysiloxanique de viscosité 50 mPa.s à 25°C
- 5 parties de méthyltriacétoxysilane
- 0,004 partie de titanate de butyle

La durée de l'incorporation de l'empâtage dans la composition $C_2$ est d' environ 2 minutes. La composition obtenue est aussitôt étalée sous forme d'une couche de 4 mm d'épaisseur sur des plaques de polyéthylène réparties selon 3 lots.

Un lot de plaques est disposé dans une enceinte portée à une temperature de 25°C, un autre lot dans une enceinte portée à une température de 50°C et le troisième lot dans une enceinte portée à une température de 100°C.

La couche de la composition déposée sur chaque plaque se transforme en une bande caoutchouteuse dont on détermine la dureté Shore A en fonction du temps. Le temps est mesuré à partir de l'instant où les plaques sont installées dans les enceintes chauffées. Les résultats sont les suivants:

**Plaques soumises à une température de 25°C**

La dureté Shore A est mesurable au bout de 25 min et elle atteint sa valeur maximale soit environ 50, au bout de 90 min.

**Plaques soumises à une température de 50°C**

La dureté Shore A est mesurable au bout de 10 min et elle atteint sa valeur maximale au bout de 60 min.

**Plaques sounises à une température de 100°C**

Le dureté Shore A est mesurable au bout de 5 min et elle atteint sa valeur maximale au bout de 20 min.

Ces résultats montrent que pour une composition déterminée, on dispose d'une large gamme de durées de vulcanisation en fonction de la température.

Par ailleurs on a stocké la composition $C_2$ dans un récipient étanche à l'humidité. Elle ne présente pas de signes d'évolution après 1 an de stockage.

**Exemple 3**

On prépare une composition durcissant dès la température ambiante, par mélange des constituants suivants:

- 100 parties d'une huile $\alpha$ - $\omega$ di(hydroxy)diméthylpolysiloxanique de viscosité 3500 mPa.s à 25°C
- 14 parties d'une silice de combustion de surface spécifique 200 m2/g
- 14 parties de silice de diatomées de diamètre particulaire moyen 5 microns
- 1,65 partie d' oxyde de titane du type rutile de diamètre particulaire 8 microns.

On élimine les traces d'eau en chauffant à 120°C sous léger vide, on refroidit et on ajoute 10 parties de méthyl tris(éthyl-2 hexanoyloxy)silane:

On ajoute à la composition ci-dessus;

- 30 parties d'une huile $\alpha$-$\omega$ bis(triméthylsiloxy) diméthypolysiloxanique de viscosité 20 mPa.s à 25°C, et on répartit la composition en 4 lots de 100 g. A trois de ces lots on ajoute respectivement 2,40, 3,60 et 4,80 g de chaux de formule $Ca(OH)_2$ de diamètre particulaire moyen 6 $\mu$m. Ainsi on obtient 3 compositions notées $D_1$ $D_2$ et $D_3$ le quatriéme lot sans chaux est appelé $C_2$.

Les compositions $C_2$, $D_1$, $D_2$ et $D_3$ sont aussitôt étalées sous forme d'une couche de 2 mm d'épaisseur sur des plaques de polyéthyléne et on mesure alors le temps nécessaire pour pouvoir décoller à la main et ôter complètement la couche d'élastomére de la plaque en polyéthylène. On laisse réticuler 5 jours à l'atmosphère anbiante et sur l'élastomère une fois durci, on fait une extraction au toluéne de l'acide éthyl-2 hexanoïque contenu dans dans l'élastomére et formé par hydrolyse du méthyl tris (éthyl - 2 hexanoyloxy)silane utilisé comme réticulant. On ajoute à l'extrait du n-butanol de façon à avoir un mélange 50/50 en volume toluènebutanol, puis on ajoute un indicateur coloré qui révéle la présence d'une acidité.

Un dosage par potasse alcoolique permet d' évaluer le nombre de millimoles d'acide éthyl-2 hexanoïque extrait par le toluène pour 100 g d'élastomère $C_2$, $D_1$, $D_2$ et $D_3$. Les résultats obtenus en ce qui concerne le temps de décollement et la quantité d'acide restant dans l'élastomère sont indiqués dans le tableau ci-dessous:

| Nature de la composition transformée en élastomère | Vitesse de réticulation | Temps pour décoller la couche d'élastomère | Quantité d'acide éthyl-2 hexanoique en millomole dans 100 g d'élastomère |
|---|---|---|---|
| $C_2$ avec 0 g $Ca(OH)_2$ | Prise lente à partir de la surface | 24 h | 39 |
| $D_1$ avec 2,4 g de $Ca(OH)_2$ pour 100 g de $C_2$ | Prise rapide dans toute la masse | 30 min | 7,7 |
| $D_2$ avec 3,60 g de $Ca(OH)_2$ pour 100 g de $C_2$ | Prise rapide dans toute la masse | 15 min | Traces |
| $D_3$ avec 4,80 g de $Ca(OH)_2$ pour 100 g de $C_2$ | Prise rapide dans toute la masse | 15 min | 0 |

Le tableau ci-dessus montre que la présence de la chaux permet d'obtenir une prise très rapide de la composition et de neutraliser l'acide éthyl-2 hexanoïque.

## Revendications

1. Compositions organopolysiloxane comprenant au moins:
   A - 100 parties de polymères principalement $\alpha$ - $\omega$ di(hydroxy)diorganopolysiloxaniques, de viscosité 700 à 1 000 000 mPa.s à 25°C, constitués chacun d'une succession de motifs diorganosiloxy de formule $R_2SiO$ dans laquelle les symboles R, identiques ou différents, représentent des radicaux hydrocarbonés ayant de 1 à 8 atomes de carbone, substitués ou non par des atomes d'halogènes, de groupes cyano.
   B - 2 à 20 parties d'agents réticulants de formule générale $R_pSi(OCOR')_{4-p}$ dans laquelle le symbole R a la signification donnée sous (A), le symbole R', représente un racical hydrocarboné exempt d'insaturation alipnatique, ayant de 1 à 15 atomes de carbone et le symbole p représente zéro ou un.
   C - 0 à 150 parties de charges minérales
   D - 0,05 à 7 parties, pour 100 parties de A + B + C, d'accélérateurs de durcissement
   caractérisées en ce que les accélérateurs (D) sont choisis parmi les hydroxydes alcalins ou alcalino-terreux.

2. Compositions selon la revendication 1, caractérisées en ce que l'accélérateur (D) est un hydroxyde anhydre ou hydraté choisi parmi les hydroxydes de lithium, de baryum, de strontium et de calcium.

3. Compositions selon l'une des revendications 1 et 2, caractérisées en ce qu'elles comportent en outre de l'eau, celle-ci étant présente lors de la réticulation à raison d'au moins 0,05% et d'au plus 35% par rapport aux hydroxydes anhydres.

4. Compositions selon l'une des revendications 1 à 3 dans lesquelles les radicaux R portés par les atomes de silicium de l'organopolysiloxane polyhydroxylé sont choisis parmi:
   - les radicaux alcoyles et halogénoalcoyles ayant de 1 à 8 atomes de carbone
   - les radicaux cycloalcoyles et halogénocycloalcoyles ayant de 4 à 8 atomes de carbone
   - les radicaux alcényles ayant de 2 à 4 atomes de carbone
   - les radicaux aryles et halogénoaryles ayant de 6 à 8 atomes de carbone
   - les radicaux cyanoalcoyles dont les chaînons alcoyles ont de 2 à 3 atomes de carbone.

5. Compositions selon l'une des revendications 1 à 4 dans lesquelles le polyacyloxysilane a pour formule: $R_pSi(OCOR')_{4-p}$ dans laquelle le symbole p représente 0 ou 1 le symbole R' représentant:
   - des radicaux alcoyles ayant de 1 à 15 atomes de carbone
   - des radicaux cyclcalcoyles ayant de 5 à 6 atomes de carbone nucléaire
   - des radicaux aryles ayant de 6 à 8 atomes de carbone.

6. Compositions selon l'une quelconque des revendications précédentes, caractérisées en ce qu'elles comportent une quantité au moins stoechiométrique d'accélérateur de durcissement par rapport à la quantité d'acide pouvant être formé lors du durcissement de la composition.

7. Composition selon l'une quelconque des revendications précédentes, caractérisées en ce que les constituants A et B sont remplacés par les produits dévolatilisés provenant de la réaction stoechiométrique de A sur B.

8. Compositions selon l'une quelconque des revendications précédentes, caractérisées en ce qu'elles comportent en outre un catalyseur de durcissement.

9. Procédé pour l'obtention des compositions selon l'une des revendications 1 à 8, selon lequel on prépare en une première étape une composition monocomposante par mélange à l'abri de l'humidité des constituants A, B, C et éventuellement des additifs et adjuvants usuels, puis ajouté et homogénéisé au moment de l'emploi les accélérateurs de durcissement (D).

10. Utilisation de compositions selon l'une des revendications 1 à 8 pour l'obtention de joints.

**Patentansprüche**

1. Organopolysiloxanzusammensetzungen umfassend mindestens:
   A - 100 Teile an Polymeren, hauptsächlich
   α-ωDi-(hydroxy)-diorganopolysiloxane der Viskosität 700 bis 1000000 mPa·s bei 25°C, bestehend jeweils aus einer Folge von Diorganosiloxygruppierungen der Formel $R_2SiO$, worin die Symbole R, die identisch oder verschieden sind, Kohlenwasserstoffreste mit 1 bis 8 Kohlenstoffatomen, die substituiert oder nicht substituiert sind durch Halogenatome oder Cyanogruppen, bedeuten,
   B - 2 bis 20 Teile Vernetzungsmittel der allgemeinen Formel $R_pSi(OCOR')_{4-p}$, worin das Symbol R die unter A gegebene Bedeutung hat, das Symbol R' einen Kohlenwasserstoffrest, frei von aliphatischer Unsättigung mit 1 bis 15 Kohlenstoffatomen und das Symbol p Null oder Eins bedeutet,
   C - 0 bis 150 Teile mineralische Füllstoffe,
   D - 0,05 bis 7 Teile je 100 Teile A + D + C Härtungsbeschleuniger,
   dadurch gekennzeichnet, daß die Beschleuniger D ausgewählt sind unter den Alkali- oder Erdalkalihydroxiden.

2. Zusammensetzungen gemäß Anspruch 1, dadurch gekennzeichnet, daß der Beschleuniger D ein wasserfreies oder wasserhaltiges llydroxid, ausgewählt unter den Lithium-, Barium-, Strontium- und Calciumhydroxiden, ist.

3. Zusammensetzungen gemäß einem der Ansprüche 1 und 2, dadurch gekennzeichnet, daß sie darüber hinaus Wasser enthalten, welches während der Vernetzung in einer Menge von mindestens 0,05 % und höchstens 35 % in Bezug auf die wasserfreien Hydroxide anwesend ist.

4. Zusammensetzungen gemäß einem der Ansprüche 1 bis 3, worin die Reste R, die von den Siliciumatomen des polyhydroxylierten Organopolysiloxans getragen sind, ausgewählt sind unter:
   - den Alkylresten und Halogenalkylresten mit 1 bis 8 Kohlenstoffatomen,
   - den Cycloalkyl- und Halogencycloalkylresten mit 4 bis 8 Kohlenstoffatomen,
   - den Alkenylresten mit 2 bis 4 Kohlenstoffatomen,
   - den Aryl- und Halogenarylresten mit 6 bis 8 Kohlenstoffatomen,
   - den Cyanoalkylresten, deren Alkylketten 2 bis 3 Kohlenstoffatome haben.

5. Zusammensetzungen gemäß einem der Ansprüche 1 bis 4, worin das Polyacyloxysilan die Formel: $R_pSi(OCOR')_{4-p}$ hat, wobei das Symbol p Null oder Eins bedeutet und das Symbol R' bedeutet:
   - Alkylreste mit 1 bis 15 Kohlenstoffatomen,
   - Cycloalkylreste mit 5 bis 6 Kernkohlenstoffatomen,
   - Arylreste mit 6 bis 8 Kohlenstoffatomen.

6. Zusammensetzungen gemäß einem der vorhergehenden Ansprüche, dadurch gekennzeichnet, daß sie eine mindestens stöchiometrische Menge Härtungsbeschleuniger in Bezug auf die Säuremenge, welche während der Härtung der Zusammensetzung gebildet werden kann, enthalten.

7. Zusammensetzung gemäß einem der vorhergehenden Ansprüche, dadurch gekennzeichnet, daß die Bestandteile A und B durch die Produkte ersetzt werden, die von der stöchiometrischen Reaktion von A auf B stammend, kondensiert wurden.

8. Zusammensetzungen gemäß einem der vorhergehenden Ansprüche, dadurch gekennzeichnet, daß sie außerdem einen Härtungskatalysator enthalten.

9. Verfahren zur Erzielung von Zusammensetzungen gemäß einem der Ansprüche 1 bis 8, dadurch gekennzeichnet, daß man in einer ersten Stufe eine Zusammensetzung mit einer Komponente durch Mischen der Bestandteile A, B, C und gegebenenfalls üblicher Zusätze und Hilfsmittel unter Feuchtigkeitsausschluß herstellt und dann im Augenblick der Verwendung die Härtungsbeschleuniger D zusetzt und homogenisiert.

10. Verwendung der Zusammensetzungen gemäß einem der Ansprüche 1 bis 8 zur Erzielung von Dichtungen oder Verbindungen.

## Claims

1. Organopolysiloxane compositions comprising at least:
A - 100 parts of chiefly $\alpha,\omega$-di(hydroxy)diorganopolysiloxane polymers, with a viscosity of 700 to 1,000,000 mPa s at 25°C, each consisting of a sequence of diorganosiloxy repeat units of formula $R_2SiO$, in which the symbols R, which are identical or different, denote hydrocarbon radicals containing from 1 to 8 carbon atoms, substituted or otherwise by halogen atoms or cyano groups,
B - 2 to 20 parts of crosslinking agents of general formula
$$R_pSi(OCOR')_{4-p}$$
in which the symbol R has the meaning given under (A), the symbol R' denotes a hydrocarbon radical free from aliphatic unsaturation and containing from 1 to 15 carbon atoms and the symbol p denotes zero or one,
C - 0 to 150 parts of mineral fillers, and
D - 0.05 to 7 parts, per 100 parts of A + B +C, of hardening accelerators
characterized in that the accelerators (D) are chosen from alkali metal or alkaline-earth metal hydroxides.

2. Compositions according to Claim 1, characterized in that the accelerator (D) is an anhydrous or hydrated hydroxide chosen from lithium, barium, strontium and calcium hydroxides.

3. Compositions according to either of Claims 1 and 2, characterized in that they additionally comprise water, the latter being present during the crosslinking in a proportion of at least 0.05 % and at most 35 % relative to the anhydrous hydroxides.

4. Compositions according to one of Claims 1 to 3, in which the radicals R carried by the silicon atoms in the polyhydroxylated organopolysiloxane are chosen from:
   - alkyl and haloalkyl radicals containing from 1 to 8 carbon atoms
   - cycloalkyl and halocycloalkyl radicals containing from 4 to 8 carbon atoms
   - alkenyl radicals containing from 2 to 4 carbon atoms
   - aryl and haloaryl radicals containing from 6 to 8 carbon atoms, and
   - cyanoalkyl radicals in which the alkyl chains contain from 2 to 3 carbon atoms.

5. Compositions according to one of Claims 1 to 4, in which the polyacyloxysilane has the formula: $R_pSi(OCOR')_{4-p}$ in which the symbol p denotes 0 or 1, the symbol R' denoting:
   - alkyl radicals containing from 1 to 15 carbon atoms
   - cycloalkyl radicals containing from 5 to 6 ring carbon atoms, and
   - aryl radicals containing from 6 to 8 carbon atoms.

6. Compositions according to any one of the preceding claims, characterized in that they comprise an at least stoichiometric quantity of hardening accelerator relative to the quantity of acid which is capable of being formed when the composition hardens.

7. Composition according to any one of the preceding claims, characterized in that the constituents A and B are replaced by devolatilized products originating from the stoichiometric reaction of A with B.

8. Compositions according to any one of the preceding claims, characterized in that they additionally comprise a hardening catalyst.

9. Process for obtaining compositions according to one of Claims 1 to 8, according to which a single-component composition is prepared in a first stage by mixing, under protection from moisture, the constituents A, B, and C, and, if appropriate, usual additives and adjuvants, to which hardening accelerators (D) are then added and homogenized at the time of use.

10. Use of compositions according to one of Claims 1 to 8 for producing seals.